# EUROPÄISCHE PATENTSCHRIFT

(11) **EP 1 183 144 B1**
(45) Veröffentlichungstag und Bekanntmachung des Hinweises auf die Patenterteilung: **05.03.2003**
(21) Anmeldenummer: 00938769.7
(22) Anmeldetag: 07.06.2000
(51) Int. Cl.: B29C 49/00, B29C 49/04, B65B 3/02

(54) **VERFAHREN ZUM HERSTELLEN VON EXTRUSIONSBLASGEFORMTEN BEHÄLTERN MIT MINDESTENS ZWEI KAMMERN**
DEVICE FOR PRODUCING EXTRUSION BLOW-MOLDED CONTAINERS WITH AT LEAST TWO CHAMBERS
PROCEDE DE REALISATION DE RECIPIENTS A AU MOINS DEUX COMPARTIMENTS, PAR EXTRUSION-SOUFFLAGE

(30) Priorität: 09.06.1999 DE 19926329
(43) Veröffentlichungstag der Anmeldung: 06.03.2002
(73) Patentinhaber: Hansen, Bernd, 74429 Sulzbach-Laufen (DE)
(72) Erfinder: Hansen, Bernd, 74429 Sulzbach-Laufen (DE)
(74) Vertreter: Patentanwälte Bartels und Partner
(86) Internationale Anmeldenummer: EP0005222
(87) Internationale Veröffentlichungsnummer: WO00076744

(56) Entgegenhaltungen:
- WO-A-97/26126
- DE-A- 1 586 023
- DE-B- 1 179 356
- US-A- 5 849 241
- PATENT ABSTRACTS OF JAPAN vol. 010, no. 378 (M-546), 17. Dezember 1986 (1986-12-17) & JP 61 171321 A (MAZDA MOTOR CORP), 2. August 1986 (1986-08-02)
- PATENT ABSTRACTS OF JAPAN vol. 007, no. 145 (M-224), 24. Juni 1983 (1983-06-24) & JP 58 056827 A (SHOWA DENKO KK), 4. April 1983 (1983-04-04)

## Beschreibung

Die Erfindung bezieht sich auf ein Verfahren zum Herstellen von Behältern, bei dem ein Schlauch plastifizierten Kunststoffmaterials und zumindest eine aus dem Kunststoffmaterial gebildete, sich im Inneren des Schlauches durchgehend erstreckende Trennwand in eine geöffnete Blasform hinein extrudiert werden, die Blasform geschlossen und durch Erzeugen eines am Schlauch wirksamen Druckgradienten dieser aufgeweitet und zur Bildung des Behälters an die formgebende Wand der Blasform angelegt wird.

Ein Verfahren dieser Art ist bereits aus der DE 1 179 356 A1 bekannt. Bei diesem Verfahren wird beim Schließen der Blasform das beim Extrudieren hintere Ende des Schlauches mittels an der Oberseite der Blasform befindlicher Schweißkanten in einem Trennschweißvorgang so verschweißt, daß das den Behälterboden bildende Kunststoffmaterial von dem Kunststoffmaterial getrennt wird, das die darüber liegende Extrudereinrichtung verläßt. Das Aufweiten des Schlauches erfolgt durch Zuführen von Blasluft vom entgegengesetzten unteren Ende der Blasform her, nämlich durch den am unteren Ende der Blasform geformten Behälterhals hindurch.

Bei der Durchführung des bekannten Verfahrens gestaltet sich die Weiterbearbeitung, die zur Herstellung gebrauchsfertiger Behälter erforderlich ist, recht umständlich. So muß der Behälter vor dem Befüllen aus der zuvor geöffneten Blasform herausgenommen und umgewendet werden, so daß der Behälterhals obenliegend ist. Weitere Arbeitsschritte sind dann für das Befüllen und das Herstellen eines Behälterverschlusses erforderlich.

Der Erfindung liegt die Aufgabe zugrunde, ein Verfahren dieser Art aufzuzeigen, das eine vergleichsweise rationellere Herstellung gebrauchsfertiger Behälter mit innerer Trennwand ermöglicht.

Bei einem Verfahren der eingangs genannten Art ist diese Aufgabe erfindungsgemäß durch die Merkmale des Anspruchs 1 gelöst.

Dadurch, daß erfindungsgemäß die beim Extrudieren vorderen Enden von Schlauch und betreffender Trennwand, also die beim Extrusionsvorgang zum unteren Ende der Blasform gelangenden Partien des Kunststoffmaterials, zur Bildung des Behälterbodens verschweißt werden, ist das obere Ende des Formhohlraumes der Blasform dem Behälterhals zugeordnet. Dementsprechend kann die Weiterbearbeitung des aufgeweiteten Behälters innerhalb der geschlossenen Blasform durchgeführt werden, indem nach dem Aufweiten des Behälters mittels Blasluft, die durch den Behälterhals hindurch beidseits neben jeder Trennwand eingeführt wird, der Füllvorgang für jede innere Behälterkammer durch den Behälterhals hindurch durchgeführt wird, ohne die Blasform zu öffnen oder den Behälter zu entnehmen.

Der Füllvorgang kann mittels eines kombinierten Blas- und Fülldornes durchgeführt werden oder durch einen gesonderten Fülldorn, der nach dem Zurückziehen des Blasdornes aus dem Behälterhals in diesen eingeführt wird.

Ein besonderer Vorteil des erfindungsgemäßen Verfahrens besteht darin, daß nach dem Befüllen des Behälters der Behälterhals mittels eines bei noch geschlossener Blasform erfolgenden zusätzlichen Schweißvorganges fertig geformt und dabei gleichzeitig mit einem durch den Schweißvorgang gebildeten Verschluß hermetisch abgeschlossen werden kann. Dies kann durch beweglich obere Schweißbacken oder Kopfbacken, die an der Oberseite der Blasform angeordnet sind, erfolgen. Hierbei können beliebige, gewünschte Form- und/oder Verschlußvorgänge durchgeführt werden, beispielsweise kann ein an einer Sollbruchstelle oder Trennstelle abreißbarer Verschluß ausgebildet werden, vorzugsweise in Form eines Drehknebelverchlusses. Es versteht sich, daß auch ein Außengewinde am Behälterhals angeformt werden könnte, um einen Schraubverschluß mit einem separaten Verschlußelement zu bilden. Bei dem am Behälterhals durchgeführten Schweißvorgang können getrennte Verschlüsse für jede Kammer des Behälters oder ein sämtliche Kammern des Behälters gemeinsam verschließender Verschluß ausgebildet werden.

Nachstehend ist die Erfindung anhand der Zeichnung im einzelnen erläutert. Es zeigen:
- Fig. 1 und 2: schematisch vereinfachte Darstellungen einer Blasform zur Bildung eines herkömmlichen Behälters aus einem extrudierten Kunststoffschlauch nach üblichem Herstellungsverfahren, wobei die Blasform geöffnet (Fig. 1) bzw. geschlossen (Fig. 2) dargestellt ist;
- Fig. 3: eine perspektivische Ansicht eines nach dem erfindungsgemäßen Verfahren hergestellten Zweikammer-Behälters ohne eingefüllten Inhalt;
- Fig. 4: einen schematisch vereinfachten Längsschnitt der Düsenanordnung einer Extrudereinrichtung zum Durchführen des erfindungsgemäßen Verfahrens;
- Fig. 5: eine abgebrochen und schematisch vereinfacht gezeichnete Ansicht des Düsenkernes eines abgewandelten Beispieles einer Extrudereinrichtung zum Durchführen des erfindungsgemäßen Verfahrens;
- Fig. 6: eine Seitenansicht eines Zweikammerbehälters, bei dem am Behälterhals ein Verschluß für beide Kammern angeformt ist, der mittels eines Abrehknebels geöffnet werden kann;
- Fig. 7: eine teils aufgebrochene Draufsicht des Behälters von Fig. 6;
- Fig. 8: eine der Fig. 1 ähnliche, schematisch vereinfachte Darstellung einer Einrichtung zur Durchführung des erfindungsgemäßen Verfahrens für die Bildung eines Zweikammerbehälters, wobei die Blasform geöffnet -dargestellt ist;
- Fig. 9 bis 11: Darstellungen der Einrichtung entsprechend Fig. 8, wobei die Blasform jeweils geschlossen ist und unterschiedliche Verfahrensschritte bei der Ausbildung, dem Befüllen bzw. dem Verschließen des Behälters dargestellt sind;
- Fig. 12: eine abgebrochene Seitenansicht des Halsteiles eines nach dem erfindungsgemäßen Verfahren hergestellten Behälters, wobei ein Drehknebelverschluß als hermetischer Abschluß zweier Behälterkammern gezeigt ist, und
- Fig. 13 und 14: eine schräge Seitenansicht bzw. Draufsicht des Behälterteiles von Fig. 12.

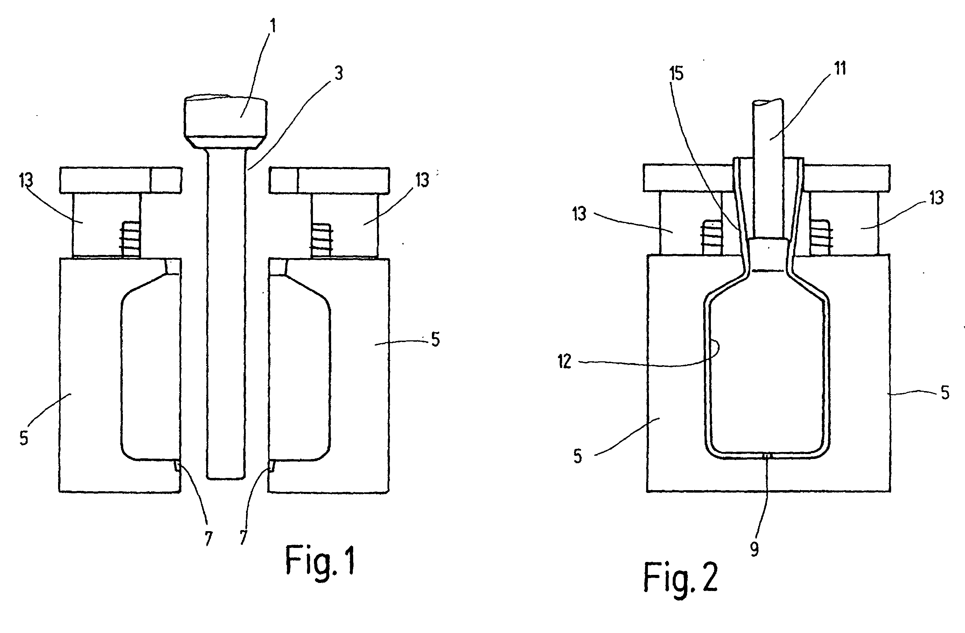

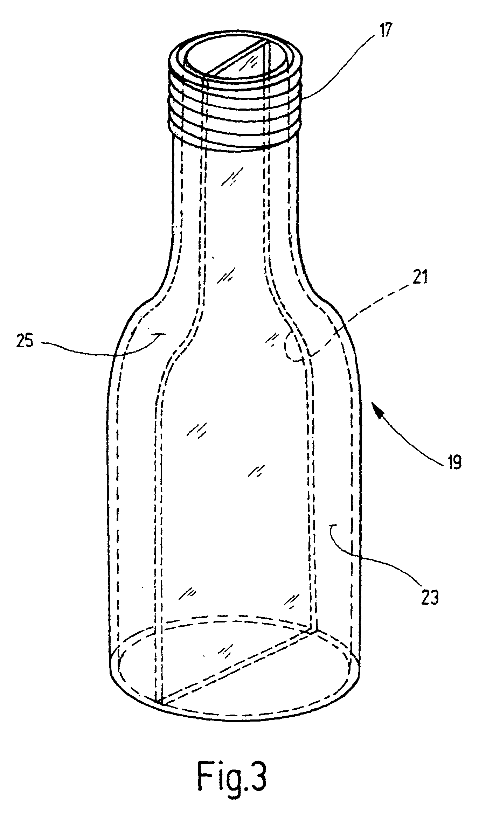

Fig. 1 und 2 zeigen eine übliche Einrichtung, wie sie im Rahmen des bekannten bottelpack®-Systems zum Herstellen eines Kunststoffbehälters bekannter Art im Blasformverfahren benutzt wird, wobei mittels einer Extrudereinrichtung 1 ein Schlauch 3 aus aufgeschmolzenem Kunststoffmaterial zwischen die beiden Formhälften 5 einer Blasform extrudiert wird, die in Fig. 1 in geöffnetem Zustand gezeigt ist. Fig. 2 zeigt die Blasform in geschlossenem Zustand, wobei die für den Hauptteil des aus dem Schlauch 3 zu bildenden Behälters 12 formgebenden Teile so zusammengefahren sind, daß bodenseitige Schweißkanten 7 am unteren Ende des Schlauches 3 einen Trennschweißvorgang ausführen, um den Schlauch 3 an einer Schweißnaht 9 (Fig. 2) zu verschließen. Durch über einen Blasdorn 11 zugeführte Luft wird der Schlauch 3 zum Behälter 12 aufgeweitet, siehe Fig. 2. Anschließend wird der Füllvorgang durchgeführt, beispielsweise über den in Fig. 2 gezeigten Dorn 11 oder einen gesonderten Fülldorn. Obere, an der Blasform bewegliche Schweißbacken 13 werden nun zusammengefahren, wodurch die Formgebung am Behälterhals bewirkt und hierbei gegebenenfalls der Behälter 12 durch Verschweißen verschlossen wird. Bei dem in Fig. 1 und 2 gezeigten Beispiel formen die Schweißbacken 13 ein Außengewinde 17 (Fig. 3) für einen Schraubverschluß.

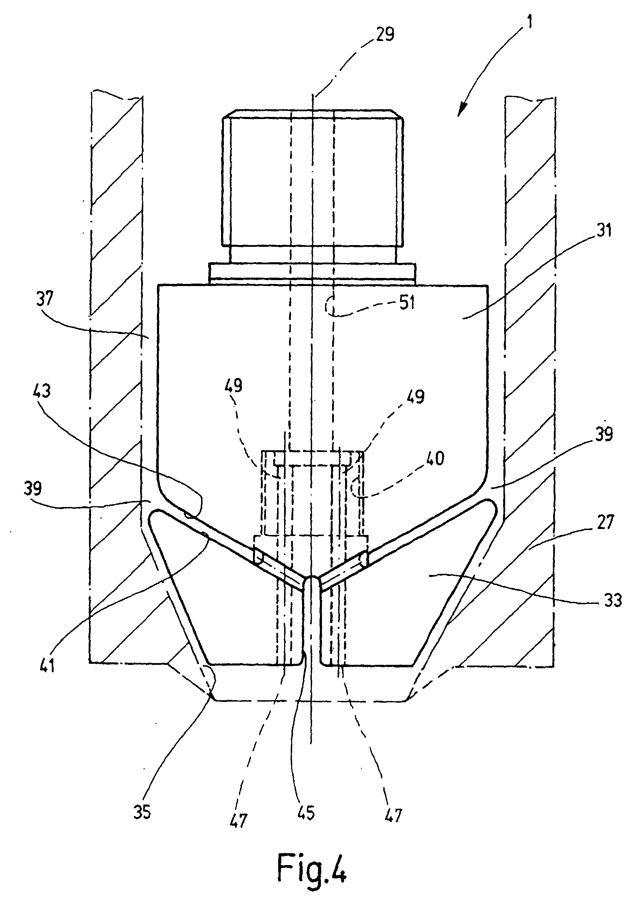

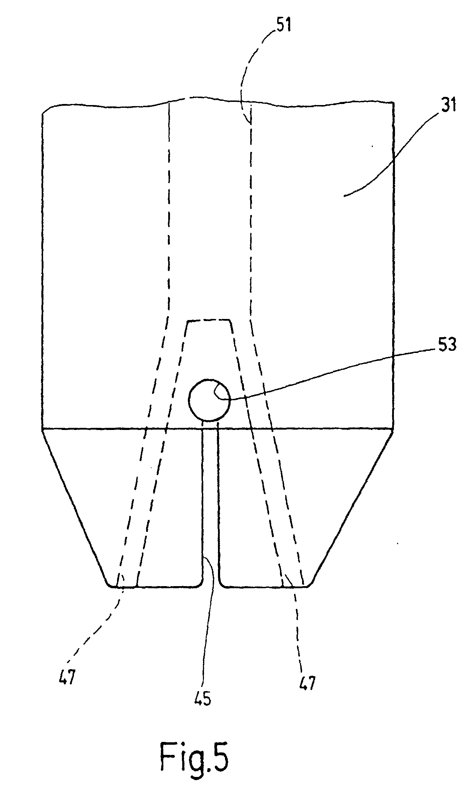

Fig. 3 zeigt in schematischer Darstellung einen nach dem erfindungsgemäßen Verfahren hergestellten Behälter 19, der im Unterschied zu dem auf herkömmliche Weise hergestellten Behälter 12 von Fig. 2 eine durchgehende innere Trennwand 21 aufweist, die den Innenraum des Behälters 19 in zwei fluiddicht voneinander getrennte Kammern 23 und 25 unterteilt. In Fig. 4 und 5 sind wesentliche Teile einer Extrudereinrichtung gezeigt, die in Zusammenwirkung mit einer in diesen Figuren nicht gezeigten Blasform zur Durchführung des erfindungsgemäßen Verfahrens vorgesehen ist, um einen Behälter herzustellen, der, wie es in Fig. 3 gezeigt ist, eine innere Trennwand 21 aufweist.

Fig. 4 zeigt das der nicht gezeigten Blasform zugewandte Ende der Extrudereinrichtung 1 mit einem Düsenring 27, in dem koaxial zur Düsenlängsachse 29 ein Düsenkern 31 angeordnet ist, dessen Kernspitze 33 mit dem Endbereich des Düsenringes 27 einen ringförmigen Auslaß 35 definiert, aus dem extrudiertes Kunststoffmaterial in Form eines Schlauches austritt. Das aufgeschmolzene Kunststoffmaterial gelangt zum Auslaß 35 über einen zwischen Düsenring 27 und Düsenkern 31 gebildeten Ringspalt 37. Wie aus Fig. 4 zu erkennen ist, verengt sich dieser Ringspalt 37 am Übergang zwischen der Kernspitze 33 und dem sich stromaufwärts anschließenden Teil des Düsenkernes 31, so daß sich ein Staubereich 39 für das zugeführte Kunststoffmaterial ergibt.

Die Kernspitze 33 ist mit dem anschließenden, stromaufwärtigen Teil des Düsenkernes 31 über einen Zapfen mit Außengewinde 40 so verschraubt, daß die einander zugewandten Flächen von Kernspitze 33 und anschließendem Teil des Düsenkernes 31 in einem Abstand voneinander angeordnet sind. Die entsprechende Fläche der Kernspitze 33 bildet eine Trichterfläche 41, während die zugewandte Fläche des übrigen Düsenkernes 31 eine Kegelfläche 43 definiert. Diese Flächen 41 und 43, die bei dem gezeigten Beispiel zur Düsen längsachse 29 Neigungswinkel von 65° bzw. 60° einschließen, bilden zwischen sich eine Führungseinrichtung für aus dem Ringspalt 37 abgezweigtes Kunststoffmaterial, das am Staubereich 39 zwischen die Flächen 41 und 43 eintritt. Durch Bohrungen in dem das Außengewinde 40 aufweisenden Zapfen der Kernspitze 33 gelangt dieses abgezweigte Kunststoffmaterial in einen in der Vorderseite der Kernspitze 33 ausgebildeten Austrittsschlitz 45. Von dort tritt das abgezweigte Kunststoffmaterial als innerhalb des extrudierten Schlauches querverlaufende Bahn aus, die nach dem Aufweiten des Schlauches in dem dabei geformten Behälter 19 die Trennwand 21 (Fig. 3) bildet. Beidseits neben dem Austrittsschlitz 45, d.h. auf beiden Seiten der aus dem Austrittsschlitz 45 austretenden Kunststoffbahn, befinden sich in der Endfläche der Kernspitze 33 je eine Austrittsöffnung 47 für Stützluft, die über Zweigleitungen 49, die in dem das Außengewinde 40 aufweisenden Zapfen ausgebildet sind, mit einem zentralen Luftkanal 51 verbunden sind.

Die vom Luftkanal 51 her über die Austrittsöffnungen 47 zugeführte Luft ist als Stützluft vorgesehen, die lediglich das Zusammenfallen des extrudierten Schlauches und dessen Zusammenkleben mit der die Trennwand 21 bildenden Bahn verhindert. Das Aufweiten des Behälters in der Blasform erfolgt in einem zusätzlich Arbeitsschritt mittels eines Blas- und Fülldornes, welcher in analoger Anordnung zu den Austrittsöffnungen 47 der Kernspitze 33 Blasöffnungen für die Zufuhr aufweitender, vorzugsweise sterilisierter, Blasluft aufweist. Diese Blasöffnungen können anschließend auch als Füllöffnungen für die Zufuhr des Füllgutes zu den Behälterkammern dienen.

Fig. 5 zeigt den vorderen Endabschnitt eines abgewandelten Düsenkernes 31 ohne umgebenden Düsenring 27. Im Unterschied zum zuvor beschriebenen Beispiel weist der Düsenkern 31 keine aufgeschraubte, vordere Kernspitze auf, um in Zusammenwirkung mit dem anschließenden Teil des Düsenkernes eine Führungseinrichtung für abzuzweigendes Kunststoffmaterial zu bilden. Vielmehr ist bei der Ausführungsform von Fig. 5 eine unmittelbare Verbindung zwischen dem endseitigen Austrittsschlitz 45 und dem den Düsenkern 31 umgebenden Ringspalt über Querbohrungen 53 vorgesehen, die sich im Düsenkern 31 quer zur Längsachse erstrecken und mit dem inneren Ende des Austrittsschlitzes 45 verbunden sind. Anzahl und Querschnitt der Querbohrungen 53 sind so gewählt, daß die gewünschte, aus dem äußeren Ringspalt abgezweigte Menge an Kunststoffmaterial aus dem Austrittsschlitz 45 als die Trennwand 21 bildende, im Inneren des Schlauches querverlaufende Bahn austritt. Wie beim zuvor beschriebenen Ausführungsbeispiel befinden sich beidseits neben dem Austrittsschlitz 45 Austrittsöffnungen 47 für Stützluft, die vom zentralen Luftkanal 51 her zugeführt wird.

Bei beiden Ausführungsbeispielen gemäß Fig. 4 und Fig. 5 läßt sich die Stärke der aus dem Austrittsschlitz 45 austretenden Bahn durch Wahl des Verhältnisses zwischen dem Düsenspalt, d.h. der Weite des innerhalb des Düsenringes gebildeten Ringspaltes 37, und der Breite des Austrittsschlitzes 45 einstellen. Beim Beispiel von Fig. 4 kann zudem der Abstand zwischen Trichterfläche 41 und Kegelfläche 43 für diese Einstellung variiert werden, ebenso das Ausmaß der Spaltverengung am Staubereich 39.

Der nach dem erfindungsgemäßen Verfahren hergestellte Behälter 19 kann, wenn es gewünscht wird, ebenso wie herkömmliche Einkammerbehälter noch innerhalb der Blasform befüllt werden, bevor die kopfseitigen, oberen Schweißbacken 13 an der Blasform zusammengefahren werden, um den Behälterhals endseitig zu formen und gegebenenfalls durch Verschweißen zu verschließen. Wie oben bereits angedeutet, kann das Befülfen des Zweikammerbehälters 19 durch einen kombinierten Blas- und Fülldorn erfolgen, oder durch einen nur die Füllfunktion ausübenden Fülldorn, der für jede der Behälterkammern 23 und 25 eine Ausgabeöffnung für das Füllgut aufweist, wobei die Ausgabeöffnungen in gleicher Weise zur Längsachse des Fülldornes versetzt angeordnet sind, wie dies bei den Austrittsöffnungen 47 für Stützluft an den hier beschriebenen Düsenkernen 31 der Extrudereinrichtung 1 der Fall ist, wo die Austrittsöffnungen 47 beidseits neben dem die Trennwand 21 bildenden Austrittsschlitz 45 münden.

Wie oben erwähnt erfolgt die Formgebung des Behälterhalses der nach dem erfindungsgemäßen Verfahren hergestellten Behälter mittels oberer beweglicher Schweißbacken 13 an der betreffenden Blasform, siehe Fig. 1 und 2. Bei dem in Fig. 3 gezeigten Beispiel des Behälters 19 wird hierbei ein Außengewinde 17 für einen Verschluß durch eine nicht gezeigte Schraubkappe hergestellt, die beide Behälterkammern 23 und 25 verschließt.

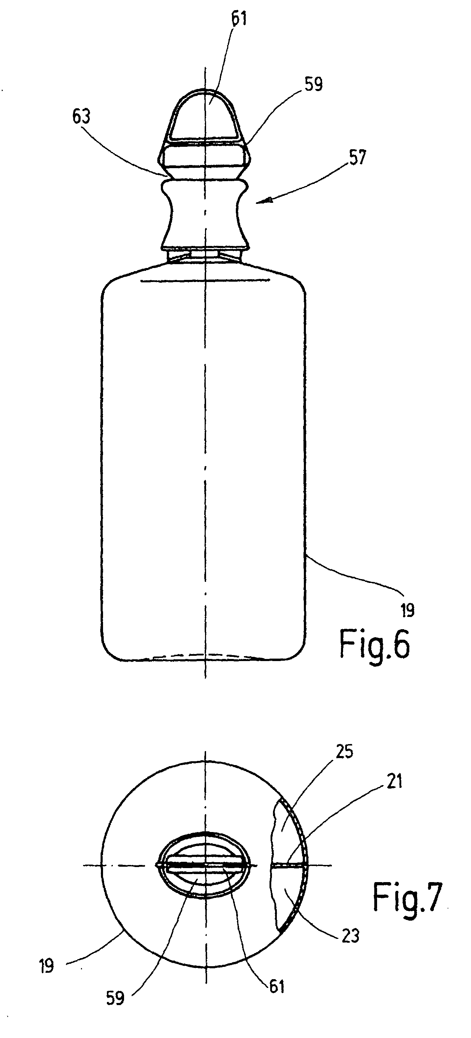

Anstelle der Ausbildung eines derartigen Schraubverschlusses kann durch die oberen Schweißbacken 13 eine andersartige Verschlußausbildung bei der Formgebung des Behälterhalses in der Weise erfolgen, wie es in der einschlägigen Technik bei Einkammerbehältern beispielsweise entsprechend dem bottelpack®-System bekannt ist. So kann, wie es in Fig. 6 und 7 gezeigt ist, am Behälterhals 57 beispielsweise ein Drehknebelverschluß geformt werden. Hierbei wird der Schweißvorgang so durchgeführt, daß beide Kammern 23 und 25 durch einen Abdrehknebel 59 verschlossen sind, der an einer als Sollbruchstelle ausgebildeten Trennstelle 63 abtrennbar ist, indem er mit Hilfe seines angeformten Griffstückes 61 verdreht wird.

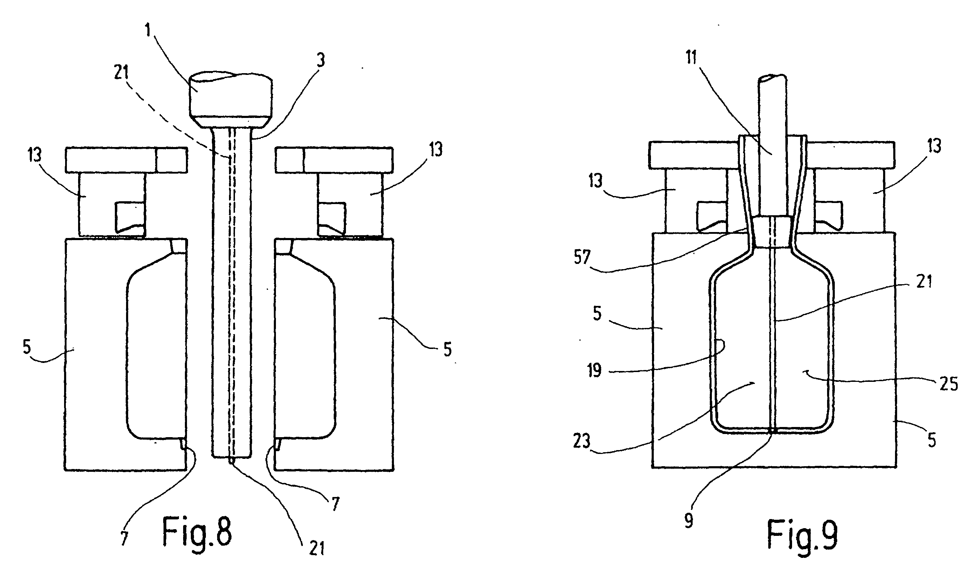

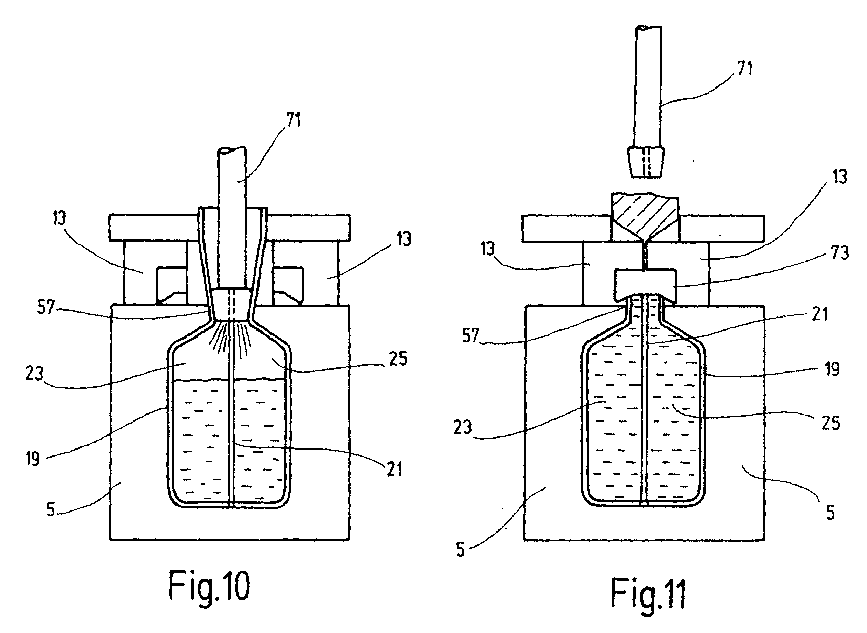

Die Fig. 8 bis 11 zeigen in jeweils stark schematisch vereinfacht gezeichneter Darstellung den Ablauf der Verfahrensabschnitte vom anfänglichen Extrusionsvorgang des Kunststoffmaterials bis zur vollständigen Herstellung eines Zweikammer-Kunststoffbehälters, dessen beide Kammern 23 und 25 befüllt und mittels eines Drehknebelverschlusses 73 (Fig. 11) hermetisch abgeschlossen sind. So zeigen Fig. 8 und 9 in Analogie zu Fig. 1 und 2 das Extrudieren des Schlauches 3 mit innerer Trennwand 21 in die geöffnete Blasform 5 bzw. das Aufweiten zum Behälter 19 mittels Blasluft, die durch den Blasdorn 11 beidseits der Trennwand 21 eingeblasen wird, nachdem (siehe Fig. 9) die Blasform 5 geschlossen wurde und dadurch die bodenseitigen Schweißkanten 7 einen Trennschweißvorgang durchgeführt haben, durch den der Schlauch 3 am unteren Ende verschlossen und mit dem Ende der Trennwand 21 an einer Schweißnaht 9 verbunden wird.

Nach Zurückziehen des Blasdornes 11 und Einführen eines Fülldornes 71, der für jede durch die Trennwand 21 getrennte Behälterkammer 23 und 25 je eine Füllöffnung aufweist, werden nun beide Kammern 23 und 25 befüllt, während sich der Behälter 19 noch innerhalb der Blasform 5 befindet (Fig. 10).

Nach erfolgtem Befüllen wird der Fülldorn 71 zurückgezogen, und die oberen Schweißbacken 13 werden zusammengefahren, um am Behälterhals 57 einen weiteren Schweißvorgang durchzuführen, bei dem der Behälterhals 57 endgültig geformt und bei dem hier gezeigten Beispiel gleichzeitig mit einer beide Kammern 23 und 25 hermetisch abschließenden Verschlußeinrichtung versehen wird. Bei dem in Fig. 11 gezeigten Beispiel wird hierbei ein Drehknebelverschluß 73 ausgebildet, so daß der Behälterhals in der Art gestaltet wird, wie dies in Fig. 6 und 7 gezeigt ist, wo ein Abdrehknebel 59 mit einem Griffstück 61 gezeigt ist, das es ermöglicht, den Knebel 59 an einer Trennstelle 63 abzudrehen, wodurch beide Kammern 23 und 25 des Behälters 19 geöffnet werden.

Nach dem Füllen des Behälters und dem Zurückziehen des Fülldornes 71 können, wenn dies gewünscht wird, vor dem hermetischen Verschließen des Behälters Einlegeteile in den Behälterhals 57 eingebracht werden. Dabei kann es sich um Funktionsteile wie einen Tropfeinsatz, einen Gummistopfen, eine Kanüle oder ein sonstiges Fremdteil handeln, die mittels Vakuumgreifer eingelegt werden können, bevor die Schweißbacken zusammengefahren werden, um das Einlegeteil zu umschweißen und gleichzeitig einen hermetischen Verschluß zu bilden.

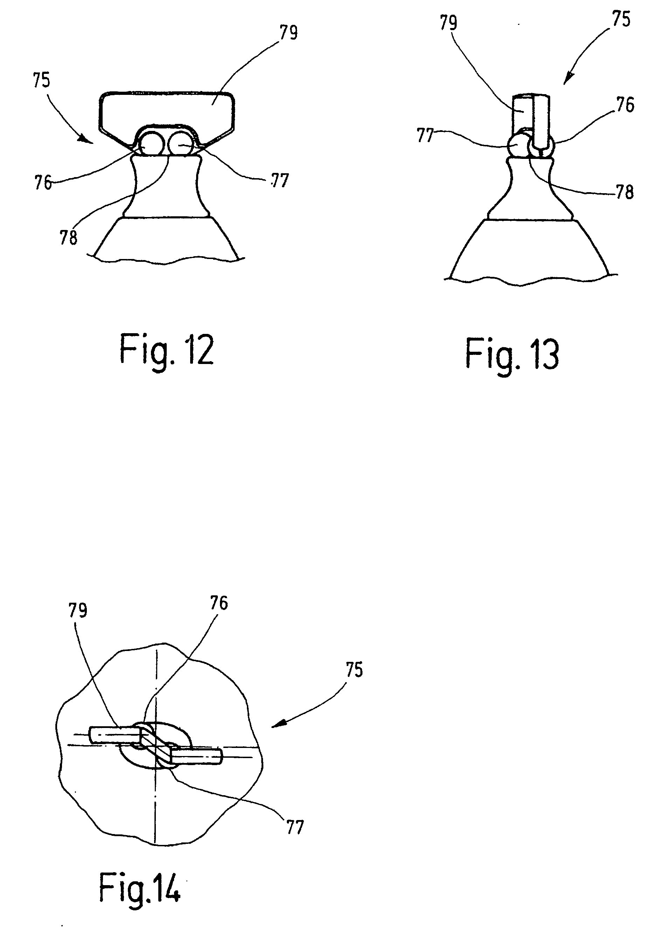

Die Fig. 12 bis 14 zeigen eine gegenüber Fig. 6, 7 und 11 abgewandelte Form eines Drehknebelverschlusses 75 für einen Zweikammerbehälter, bei dem jede Kammer durch ein gesondertes, kugeliges Verschlußelement 76 und 77 abgeschlossen ist. Mittels eines beiden Verschlußelementen 76 und 77 gemeinsamen Griffstückes 79 lassen sich beide Verschlußelemente 76 und 77 an einer Trennstelle 78 abdrehen, so daß beide Kammern des Behälters geöffnet werden.

Während die Erfindung vorstehend anhand der Herstellung eines Zweikammerbehälters beschrieben ist, versteht es sich, daß am Düsenkern 31 der Extrudereinrichtung 1 mehr als ein Austrittsschlitz 45 vorgesehen sein könnte, um mehr als eine Kunststoffbahn zu extrudieren. Innerhalb des Kunststoffschlauches können so mehrere Trennwände gebildet werden, zu deren beiden Seiten jeweils Blasluft zugeführt wird, um in der betreffenden Blasform einen Mehrkammerbehälter zu formen.

## Patentansprüche

1. Verfahren zum Herstellen von Behältern (19), bei dem ein Schlauch (3) plastifizierten Kunststoffmaterials und zumindest eine aus dem Kunststoffmaterial gebildete, sich im Inneren des Schlauches (3) durchgehend erstreckende Trennwand (21) in eine geöffnete Blasform (5) hinein extrudiert werden, die Blasform geschlossen und durch Erzeugen eines am Schlauch wirksamen Druckgradienten dieser aufgeweitet und zur Bildung des Behälters (19) an die formgebende Wand der Blasform (5) angelegt wird, wobei das Aufweiten des Schlauches (3) durch Zuführen von Blasluft von dem dem Behälterboden entgegengesetzten, dem Behälterhals (57) zugeordneten Ende der geschlossenen Blasform her so erfolgt, daß die Blasluft zu beiden Seiten jeder Trennwand (21) aufweitend wirkt, um im Behälter voneinander getrennte Kammern (23,25) auszubilden, **dadurch gekennzeichnet, daß** durch Schließen der geöffneten Blasform (5) das beim Extrudieren vordere Ende des Schlauches (3) und das vordere Ende jeder Trennwand (21) miteinander verschweißt werden, und daß sowohl das Hineinextrudieren des Kunststoffmaterials in die geöffnete Blasform (5) als auch die Zuführung der Blasluft von der dem Behälterhals (57) zugewandten Seite der Blasform (5) aus erfolgen.

2. Verfahren nach Anspruch 1, **dadurch gekennzeichnet, daß** nach Beendigen der Blasluftzufuhr die Kammern (23, 25) des in der geschlossenen Blasform befindlichen Behälters (19) befüllt werden.

3. Verfahren nach Anspruch 2, **dadurch gekennzeichnet, daß** nach dem Befüllen der Kammern (23, 25) die Formgebung des Behälterhalses (57) durch einen Schweißvorgang mittels des Schließens von am oberen Ende der Blasform befindlichen, beweglichen Schweißbacken (13) durchgeführt wird.

4. Verfahren nach Anspruch 3, **dadurch gekennzeichnet, daß** beim Schließen der den Behälterhals (57) formenden oberen Schweißbacken (13) ein sämtliche Kammern (23, 25) des Behälters (19) am Behälterhals (57) hermetisch verschließender Schweißvorgang durchgeführt wird.

5. Verfahren nach Anspruch 4, **dadurch gekennzeichnet, daß** bei dem den Behälterhals (57) formenden und verschließenden Schweißvorgang ein sämtliche Kammern (23, 25) des Behälters (19) gemeinsam verschließender Verschluß (59, 61) ausgebildet wird.

6. Verfahren nach Anspruch 4, **dadurch gekennzeichnet, daß** bei dem den Behälterhals formenden und verschließenden Schweißvorgang getrennte Verschlüsse (76, 77) für jede Kammer (23, 25) des Behälters (19) gebildet werden.

7. Verfahren nach einem der Ansprüche 5 bis 6, **dadurch gekennzeichnet, daß** bei dem den Verschluß bildenden Schweißvorgang jeweils ein an einer Sollbruchstelle (63, 78) trennbares Verschlußelement, vorzugsweise ein Drehknebelverschluß (59; 73; 75), ausgebildet wird.

8. Verfahren nach einem der Ansprüche 1 bis 7, **dadurch gekennzeichnet, daß** nach dem Extrudieren des Schlauches (3) und vor dem Aufweiten desselben zu beiden Seiten der Trennwand (21) oder der Trennwände Stützluft in den Schlauch (3) eingeführt wird, um das Zusammenfallen und Verkleben des Schlauches (3) mit der jeweiligen Trennwand (21) zu verhindern.

9. Verfahren nach einem der Ansprüche 1 bis 8, **dadurch gekennzeichnet, daß** das Zuführen der den Behälter (19) aufweitenden Blasluft und das Befüllen des geformten Behälters mittels eines kombinierten Blas-Fülldornes durchgeführt wird.

## Claims

1. A method of producing containers (19) in which a tube (3) from plasticised plastic material and at least one separating wall (21) formed from the plastic material that extends within the tube (3) are extruded into an open blow mould (5), the blow mould being then closed and the tube expanded by pressure acting upon it and applied to the shaping wall of the blow mould (5), whereby the tube (3) is expanded by the introduction of blow air from the end of the closed blow mould which is opposite to the base of the container and associated with the container neck (57) in such a manner that the blow air has an expanding effect on both sides of each separating wall (21) to form the chambers (23, 25) separated from each other in the container, **characterised in that** the front end of the tube (3) and the front end of each separating wall (21) are welded together by closing the open blow mould (5), and that the plastic material is extruded into the open blow mould (5) as well as the blow air introduced from the end of the blow mould (5) at the container neck (57).

2. A process according to claim 1, **characterised in that** the chambers (23, 25) of the container (19) located in the closed blow mould are filled at the end of the blow air sequence.

3. A process according to claim 2, **characterised in that** the container neck (57) is shaped in a welding operation by closing the movable welding jaws (13) at the top end of the blow mould, after filling the chambers (23, 25).

4. A process according to claim 3, **characterised in that** a welding operation hermetically closing all chambers (23, 25) of the container (19) at the container neck (57) is carried out on closing the top welding jaws (13) which shape the container neck (57).

5. A process according to claim 4, **characterised in that** a common closure (59, 61) closing all chambers (23, 25) of the container (19) together, is formed during the welding operation forming and closing the container neck (57).

6. A process according to claim 4, **characterised in that** separate closures (76, 77) for each chamber (23, 25) of the container (19) are formed during the welding operation forming and closing the container neck.

7. A process according to claim 5 or 6, **characterised in that** a removable closure component, preferably a twist bar closure (59; 73; 75) is formed at each break-off point (63, 78).

8. A process according to one of the claims 1 to 7, **characterised in that** supporting air is introduced into the tube (3) after the extrusion of the tube (3) and before expanding it to both sides of the separating wall or walls (21), to prevent the tube collapsing and bonding with the respective separating wall (21).

9. A process according to one of the claims 1 to 8, **characterised in that** the blow air expanding the container (19) is introduced and the moulded container filled through a combination blow/filling tube.

## Revendications

1. Procédé de fabrication de récipients (19), dans lequel un tuyau flexible (3) en matière plastique plastifiée et au moins une paroi de séparation (21) formée dans la matière plastique, s'étendant en continu à l'intérieur du tuyau flexible (3), sont extrudés à l'intérieur d'un moule de soufflage (5) ouvert, le moule de soufflage est fermé et, par la génération d'un gradient de pression agissant sur le tuyau flexible, celui-ci est élargi et appliqué contre la paroi de façonnage du moule de soufflage (5) pour former le récipient (19), moyennant quoi l'élargissement du tuyau flexible (3) se fait en introduisant de l'air de soufflage à partir de l'extrémité du moule de soufflage correspondant au goulot du récipient (57), opposée au fond du récipient, de manière à ce que l'air de soufflage exerce un effet élargissant sur les deux côtés de la paroi de séparation (21) pour former des compartiments (23, 25) séparés les uns des autres dans le récipient, **caractérisé en ce que**, mors de la fermeture du moule de soufflage ouvert (5), l'extrémité avant du tuyau flexible (3) pendant l'extrusion et l'extrémité avant de chaque paroi de séparation (21) sont soudées l'une avec l'autre et **en ce que**, aussi bien l'extrusion de la matière plastique à l'intérieur du moule de soufflage ouvert (5) que l'amenée de l'air de soufflage se font à partir du côté du moule de soufflage (5) tourné vers le goulot du récipient (57).

2. Procédé selon la revendication 1, **caractérisé en ce que**, une fois l'amenée de l'air de soufflage terminée, les compartiments (23, 25) du récipient (19) se trouvant dans le moule de soufflage fermé sont remplis.

3. Procédé selon la revendication 2, **caractérisé en ce que**, une fois le remplissage des compartiments (23, 25) terminé, le façonnage du goulot du récipient (57) est effectué par une opération de soudage par la fermeture de joues de soudage (13) mobiles disposées à l'extrémité supérieure du moule de soufflage.

4. Procédé selon la revendication 3, **caractérisé en ce que**, lors de la fermeture des joues de soudage (13) supérieures formant le goulot du récipient (57), une opération de soudage fermant hermétiquement tous les compartiments (23, 25) du récipient (19) au goulot du récipient (57) est réalisée.

5. Procédé selon la revendication 4, **caractérisé en ce que**, lors de l'opération de soudage formant et fermant le goulot du récipient (57), une fermeture (59, 61) enfermant en commun tous les compartiments (23, 25) du récipient (19) est formée.

6. Procédé selon la revendication 4, **caractérisé en ce que**, lors de l'opération de soudage formant et fermant le goulot du récipient, des fermetures (76, 77) séparées sont formées pour chaque compartiment (23, 25) du récipient (19).

7. Procédé selon l'une des revendications 4 à 6, **caractérisé en ce que**, lors de l'opération de soudage formant la fermeture, un élément de fermeture séparable en un point destiné à la rupture (63, 78), de préférence une fermeture demi-tour à garrot (59; 73; 75), est formé.

8. Procédé selon l'une des revendications 1 à 7, **caractérisé en ce que**, après l'extrusion du tuyau flexible (3) et avant l'élargissement de celui-ci, de l'air de soutien est introduit dans le tuyau flexible (3) des deux côtés de la paroi de séparation (21) ou des parois de séparation pour empêcher l'affaissement et le collage du tuyau flexible (3) avec la paroi de séparation respective (21).

9. Procédé selon l'une des revendications 1 à 8, **caractérisé en ce que** l'amenée de l'air de soufflage élargissant le récipient (19) et le remplissage du récipient moulé sont effectués à l'aide d'un mandrin combiné de soufflage-remplissage.
